# EUROPEAN PATENT APPLICATION

(11) **EP 0 942 265 A2**
(43) Date of publication of application: **15.09.1999**
(21) Application number: 99301541.1
(22) Date of filing: 02.03.1999
(51) Int. Cl.: G01J 3/00

(54) **Spectrometer for monitoring telecommunications signals**

(30) Priority: 12.03.1998 US 41436
(71) Applicant: LUCENT TECHNOLOGIES INC., Murray Hill, New Jersey 07974-0636 (US)
(72) Inventor: Ford, Joseph Earl, Oakhurst, New Jersey 07755 (US); Woodward, Ted Kirk, Holmdel, New Jersey 07733 (US)
(74) Representative: Johnston, Kenneth Graham

(57) **Abstract**

An optical spectrometer comprising an optical dispersive element for spatially dispersing an incoming optical signal including at least one wavelength, and an integrated optoelectronic device including a plurality of detectors for linearly detecting the at least one wavelength signal and integrated with a processor chip for processing the resulting electrical intensity signals from the detected at least one wavelength signal.

## Description

### Technical Field of the Invention

This invention relates to optical spectrometers and, more particularly, to a spectrometer for monitoring optical telecommunication signals.

### Background of the Invention

In a wavelength division multiplexed (WDM) optical network many data channels are carried on the same fiber. The optical characteristics of the path - including amplification, loss, and noise - are wavelength dependent. To maintain low bit error rate transmission on all channels, it is useful to be able to independently monitor and optimize each wavelength signal. It is desirable to monitor the status of such communication links for a variety of purposes. Such monitoring can be done with a linear detector array, whose outputs are coupled to analog amplifiers and interpreted by off-chip computers. Such amplified detector arrays are commercially available and have been used in the scientific community for spectroscopy applications. Unfortunately, as the wavelength density and the modulation rates of the WDM signals has increased these prior art spectrometers have not been able to adequately monitor and process these WDM signals

### Summary of the Invention

The present invention is directed to solving the prior art problems using an optical spectrometer comprising an optical dispersive element for spatially dispersing an incoming optical signal including at least one wavelength, and an integrated optoelectronic device including a plurality of detectors for linearly detecting the at least one wavelength signal and integrated with a processor chip for processing the resulting electrical intensity signals from the detected at least one wavelength signal.

According to one aspect of our invention, the plurality of detectors is integrated to the processor chip using a bonding technique selected from a group including at least flip-chip bonding, epitaxial lift-off, and heteroepitaxial growth. According to another aspect an incoming Wavelength Division Multiplexed (WDM) optical signal is received over one or more optical fibers and the integrated optoelectronic device includes one or more linear arrays of detectors for detecting each wavelength of the WDM optical signal from each fiber. The processing device performs one or more functions from a group of functions including at least filtering, data reduction, wavelength identification, wavelength power detection, power discrimination, signal-to-noise ratio measurement, and decoding digital telemetry or data signals.

### Brief Description of the Drawing

In the drawing,
Fig. 1 shows a block diagram of a prior art spectrometer;
Fig. 2 shows a an illustrative incoming optical signal and its detection by low resolution (Fig. 2a) and high resolution (Fig. 2b) detector arrays;
Fig. 3 shows a first illustrative arrangement of our optical spectrometer;
Figs.4. shows a second illustrative arrangement of our optical spectrometer; and
Fig. 5; shows an illustrative optoelectronic chip for detecting and processing of the detected signals.

### Detailed Description

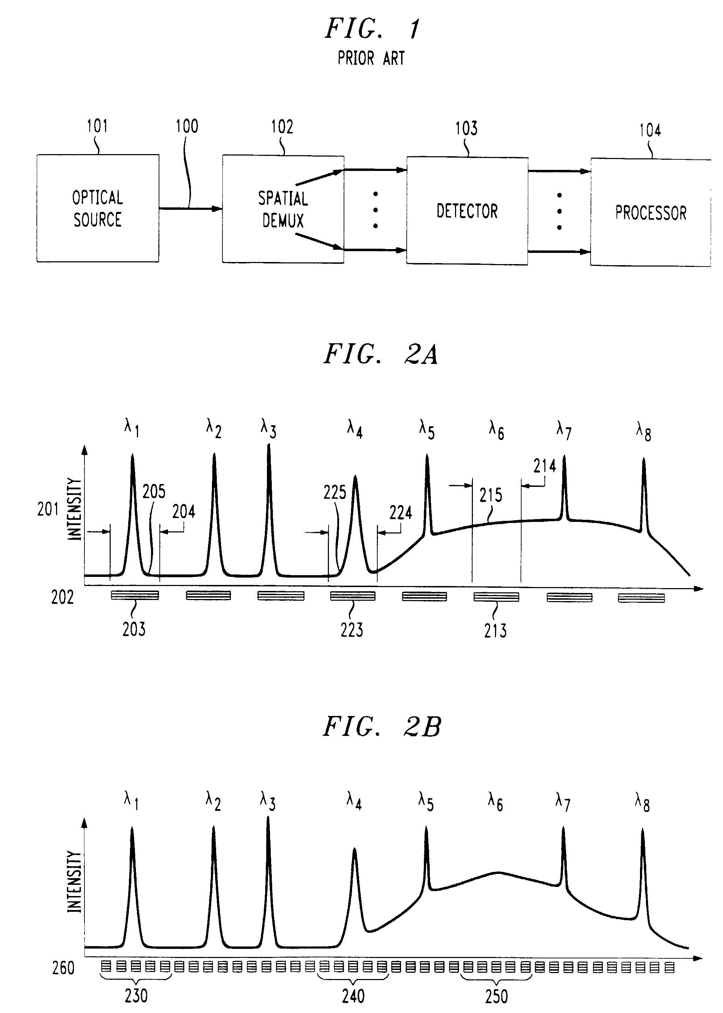

In the following description, each item or block of each figure has a reference designation associated therewith, the first number of which refers to the figure in which that item is first located (e.g., 101 is located in FIG. 1).

With reference to Fig. 1 there is shown a block diagram of a prior art spectrometer. The optical input signal 100 may originate from a source 101 which may be, e.g., an optical fiber, a modulated laser, etc. The optical signal 100 is then spatially demultiplexed in a wavelength demultiplexer or spatial dispersion device 102. The optical signal may include a single wavelength or may be a Wavelength Division Multiplexed (WDM) signal. (Shown in Fig. 2a, is an illustrative representation of a dispersed or demultiplexed WDM signal showing its constituent wavelengths.) The demultiplexed WDM signal is then detected in detector unit 103 and the resulting electrical signals are processed in a separate processor unit 104. As the wavelength density and the modulation rates of the WDM signals has increased the prior art spectrometers have not been able to adequately monitor and process these signals. The result has been to limit the processing of the input optical signal to the information processing bandwidth or rate of processor 104. This limited processing is accomplished by either selecting only part of the dispersed optical signal for processing (e.g., by reducing the number of detector signals that are processed) or by performing non-real time processing of the dispersed optical signal (e.g., by sampling the signal at a rate which is less than the rate at which the signal is changing).

In accordance with the present invention, we have designed an improved optical signal spectrometer having an information processing rate that is several orders of magnitudes greater than prior art optical signal spectrometers. Our optical signal spectrometer includes an integrated optoelectronic device having a high resolution detector array to provide improved real-time processing and/or increased wavelength resolution of the dispersed optical signal. Our optical signal spectrometer thus provides a network operator with more complete and detailed information about each WDM signal, such as more accurate wavelength detection for each wavelength channel, more accurate optical bandwidth of each wavelength channel, more accurate average signal level and average background noise for each wavelength channel, the ability to identify complex real-time interactions between WDM channels, and, by virtue of this, the ability to control aspects of the WDM system within which the monitoring may be taking place.

Shown in Fig. 2 is a drawing of the WDM signal intensity profile 201 showing how the wavelength channels are distributed in space. As shown in the Fig. 2a drawing, if only the average intensity of each channel is required, then the detector array 202 uses only one detector per modulator or wavelength channel (thus 8 detectors are shown for the 8 wavelength channels in Fig. 2a.) For example, detector 203 measures the average signal intensity of the optical signal present in the wavelength band 204, which includes the signal wavelength λ₁. Note that depending on the background optical noise level, the average signal intensity detected in a detector may or may not correctly indicate that a signal wavelength is present. For example, since the background optical noise level 205 around signal wavelength λ₁ is low, the average signal intensity detected in detector 203 correctly indicates the presence of the wavelength signal λ₁. However, since the background optical noise level 215 in signal band 214 is high, the average signal intensity detected in detector 213 would be high and would incorrectly indicate the presence of the wavelength signal λ₆. Moreover, since the average signal intensity detected in detector 213 is greater than average signal intensity detected in detector 203 the optical signal spectrometer would incorrectly conclude that the intensity at wavelength λ₆ exceeds that of wavelength λ₁, when in fact there is no wavelength λ₆ signal present.

Even if the background optical noise level is the same in all of the eight signal channels, the average signal intensity detected in the detectors would not necessarily indicate which signal channel had the strongest peak signal. This is illustrated by comparing the greater average signal intensity detected in detector 223 with that detected in detector 203 which would cause one to erroneously conclude that the peak intensity of wavelength λ₄ exceeds that of wavelength λ₁ when in fact, as shown, the peak intensity wavelength λ₁ exceeds that of wavelength λ₄. Additionally, the detector array 202 can only determine the actual wavelength of the received signal to within the wavelength bandwidth resolution, e.g., 204, of the detectors. The wavelength bandwidth resolution is determined by the size of the detectors utilized in detector array 202, the smaller the size of the detector the finer the bandwidth resolution.

In accordance with the present invention, our optical spectrometer includes a high resolution detector array bonded to an integrated circuit processing chip for linearly detecting wavelength signal channels and for processing the resulting electrical intensity signals from the detected wavelength signal. The higher resolution detector array using smaller detectors, as shown by 260 in the Fig. 2b drawing, provides more accurate information about the exact wavelength of each signal channel in the received incoming optical signal. For example, while the first and fourth channels, λ₁ and λ₄ respectively, have a similar average intensity levels, the channel λ₁ has a narrower wavelength bandwidth and a higher peak intensity than the channel λ₄. These characteristics can easily be measured using multiple detectors for each channel, providing that the optical system has an impulse response (monochromatic spot diameter) which is much smaller than the wavelength pitch. As shown by 230 and 240 in Fig. 2b, illustratively, 5 detectors are used for each wavelength channel. Using the five detector groups 230 and 240 provides multiple samples for each channel making it easy to detect that the channel λ₁ has a narrower wavelength bandwidth and a higher peak intensity than the channel λ₄. Moreover, the five detector group 250 makes it easy to determine that no detectable wavelength λ₆ signal exists in channel 6 and that the background optical noise in channel 6 is greater than the background optical noise in channels 1 and 4. Thus, using the large group of smaller detectors 260 in Fig. 2b to detect the intensity of the dispersed incoming optical signal provides the network operator with a much more accurate representation of the actual wavelength frequency and intensity of the various signal channels and the background optical noise present in the incoming optical signal 201.

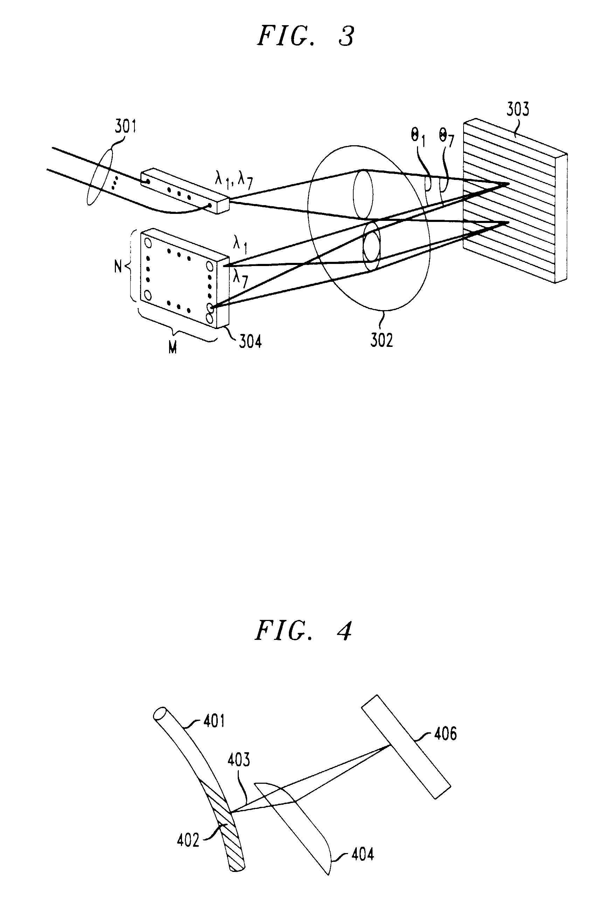

With reference to Fig. 3 there is shown an illustrative arrangement of our optical spectrometer which uses free space optics to disperse or demultiplex the signal wavelengths of a WDM signal, from an input fiber or array of fibers, onto a detector/processing chip. Optical signals are received over an input fiber array having M fibers 301. The optical output from these fibers 301 are collimated by an optional collimating lens 302 onto planar diffraction grating 303. The planar diffraction grating 303 diffracts the optical signals back through the collimating lens 302 which then focuses the optical signals onto an optoelectronic chip 304. The optoelectronic chip 304 includes a two-dimension array (M by N array) of detectors which detect the optical signals which are then processed by a processor chip integrated therewith. When the optional collimating lens 302 is not used the optical signals from the fiber array 301 are directed to planar diffraction grating 303 (with optical power- i.e., ruled onto a curved substrate) which diffracts the optical signals back to the optoelectronic chip 304.

Each of the M optical fibers of array 301 has a corresponding linear array or column of detectors located on optoelectronic chip 304. The optical spectrometer arrangement of Fig. 3 may also be utilized for detecting and processing signals from a single optical fiber. Each column of detectors includes N groups of detectors (each detector group including 5 detectors as shown in Fig. 2b) each detector group detecting one of the N wavelengths in the incoming signal received over a fiber. Each column of N groups of detectors detects optical signals from a different fiber of fiber array 301. Thus for an M input fiber array 301 each fiber carrying a WDM signal having N= 8 wavelengths, our illustrative optoelectronic chip 304 includes M columns of N groups of detectors. As shown, an Illustrative optical signal λ₇, which is one of the illustrative N=8 wavelengths of the WDM signal outputted from a fiber and diffracted at an angle θ₇ and is detected by the seventh group of detectors (of a total of N=8 groups of detectors) on optoelectronic chip 304. Since the diffraction angle θ is approximately proportional to the wavelength, each different wavelength from an optical fiber is diffracted to a different detector group on optoelectronic chip 304. Thus, as shown, a wavelength λ₁ is deflected by θ₁ and is detected by the first detector group of the right-hand column of detector groups of optoelectronic chip 304.

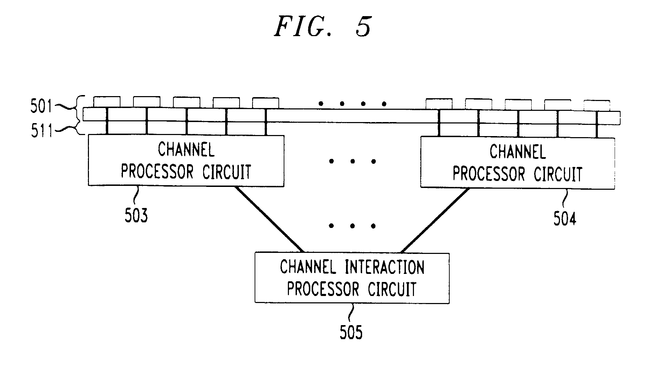

Shown in Fig. 4 is another illustrative embodiment of the invention. In this arrangement, an optical fiber 401 has a fiber grating 402 thereon which diffracts the different wavelengths of the optical signal through an optical element including a glass block 403 and a lens 404 to an optoelectronic chip 406. The optoelectronic chip 406 includes the optical detector and processor units.

The requirements for monitoring optical signals in WDM telecommunications are different from most scientific applications in that (1) we know the number and approximate wavelengths of the signals, and (2) in addition to the spectra, our spectrometer can measure fast time-dependent signals such as bit error rates. We may also need to evaluate the time-dependent interactions between spectral elements. Further, it may be highly desirable for the whole assembly to be compact in size.

Thus, the detector array is designed to measure optical signal intensity as a function of time and requires high-speed connections to the processing circuitry. With reference to Fig. 5, to accomplish this high-speed connection 511 the detector array 501 are made integral with the processing circuit 510. The combining of the detecting and processing functions on the same optoelectronic chip is, illustratively, accomplished flip-chip bonding type III-IV detectors onto a silicon CMOS chip. This fabrication process has been developed at Bell Labs for high-speed optoelectronic switching using 850 nm light [e.g., see K. Goossen et al, "GaAs MQW modulators integrated with silicon CMOS," *IEEE Photonics Technology Letters 7,* 360-62, 1995]. Extension of the process to 1550 nm light is a relatively straightforward development involving changing the detector composition to one sensitive to 1550 nm light.

Special high-speed processor circuits can process the detector outputs before the data is sent off chip. For example an extinction ratio is made by measuring the average high and low signal values on each detector. A signal-to-noise ratio (SNR) can be inferred from this measurement, or can be independently derived by measuring the noise on the channels. This SNR measurement yields information to evaluate signal transmission quality. The apriori knowledge about the signals can also be exploited. We know the signal (if any) must lie within a limited band, so it is possible to cluster the detectors into groups (in Figure 2, groups of 5) and use a winner-take-all circuit to calculate the center wavelengths with simple local processing circuitry. Further, if changes in wavelength are of particular interest, these can be calculated for each channel cluster with a hardware derivative circuit

The detector arrays can be implemented using Galium Arsenide (GaAs) detectors. Optoelectronic VLSI technologies are available for attaching large numbers (thousands) of detectors to Silicon VLSI. The detector array may also be bonded to the integrated circuit processor chip using any of the well known bonding techniques such as flip-chip, epitaxial lift-off, and heteroepitaxial growth. The processing ASIC device may process the detected signals by performing one or functions from a group of functions including at least filtering, data reduction, wavelength identification, wavelength power detection, power discrimination, wavelength shift as a function of time, variation in peak power between channels, etc.

With reference to Fig. 5, there is shown a block diagram of an illustrative opt-electronic chip for detecting and processing of the detected signals. Each of the optical channel detector units 501 and 502 have multiple detectors (5 per channel in our example of Fig. 2b) for detecting optical signal intensity levels within each of the channels of the WDM signal. The processor 510 includes separate channel processors 503 and 504, associated with each of the wavelength optical channel detector units 501 and 502, respectively, for calculating wavelength center frequency, power levels etc. A higher level processor unit 505 is used to perform inter-channel comparisons and channel interaction calculations which require measurements from more than one channel. Such calculations might include the separation between spectral peaks, the average and/or peak power variation between channels.

The optoelectonic chip of Fig. 5 takes advantage of the nominal wavelength separation of the WDM signals and the known number of channels to integrate monitoring (i.e., detection) capability on the chip. As previously discussed since the detector units 501 and 502 are made integral with the processor 510 the interconnections 511 therebetween is a very high speed communication connection. The resulting high speed (or high bandwidth) connection enables real-time high speed signal processing of the detected WDM signals. The detection and processing techniques of the present invention thus enables the implementation of a smart spectrometer. This is enabled particularly by the ability to combine large amounts of processing electronics with the optical signal detectors and arises from the ability to combine or integrate the detectors directly on the chip with the processing circuitry. This smart spectrometer can then look at the signals from a number of detectors over which the desired communication channel is known to appear and determine whether the signal is at the center of the band, or displaced to shorter or longer wavelengths. This can be determined by finding the peak signal channel and by determining the separation from the desired center channel detector (determined from a previous calibration procedure). This information can be passed to other parts of the communication system, or used for real-time active control of the input signal. In addition, if the location of the adjacent signal is known, one can monitor the channel separation. Thus the processor(s) arrangement may perform functions including filtering, data reduction, wavelength identification, wavelength power detection, power discrimination. This processing arrangement also enables the measurement of fast time-dependent behaviors of the signal, such as the detection of data modulation and bit error rates.

Since the interconnection between the detector and processor elements is small, compact, and of high bandwidth, it should be apparent that multiple separate processing circuits could be present on the same chip, sharing the connection to the detector(s), should this prove to desirable. An example might be the use of two distinct circuits, one for high speed data detection, and the other for high sensitivity SNR determination.

What has been described is merely illustrative of the application of the principles of the present invention. Other arrangements and methods can be implemented by those skilled in the art without departing from the spirit and scope of the present invention.

## Claims

1. An optical spectrometer comprising
an optical dispersive element for spacially dispersing an optical signal including at least one wavelength and
an integrated optoelectronic device including a plurality of detectors for linearly detecting the at least one wavelength signal and integrated together with a processor chip for processing the resulting electrical intensity signals from the detected at least one wavelength signal.

2. The optical spectrometer of claim 1 wherein said plurality of detectors are integrated to the processor chip using a bonding technique selected from a group including at least flip-chip bonding, epitaxial lift-off, and heteroepitaxial growth.

3. The optical spectrometer of claim 1 wherein the optical signal is a WDM signal received over an optical fiber and the integrated optoelectronic device includes one or more linear arrays of detectors for linearly detecting each wavelength of the WDM signal.

4. The optical spectrometer of claim 1, wherein a plurality of WDM signals are to be received over a plurality of optical fibers and the integrated optoelectronic device includes a two-dimensional array of detectors including a linear array of detectors for detecting each of the plurality of WDM signals.

5. The optical spectrometer of claim 1 wherein the processor chip performs one or more processing functions selected from a group of functions including at least filtering, data reduction, wavelength identification, wavelength power detection, and power discrimination signal-to-noise ratio measurement, and decoding digital telemetry or data signals.

6. The optical spectrometer of claim 1 wherein the processor chip is an Application Specific Integrated Circuit (ASIC).

7. The optical spectrometer of claim 1 wherein the optical signal is a WDM signal and the processor chip includes a separate channel processor stage for processing each of the WDM signals.

8. The optical spectrometer of claim 7 wherein the processor chip includes a separate processor stage connected to the channel processors for performing channel interaction processing.

9. The optical spectrometer of claim 1 wherein the optical dispersal element includes a planar diffraction grating for diffracting the incoming optical signal onto the plurality of detectors of the optoelectronic device.

10. The optical spectrometer of claim 1 wherein the optical dispersal element includes a collimating lens for directing the incoming optical signal to the planar diffraction grating and for focusing the diffracted incoming optical signal onto the plurality of detectors of the optoelectronic device.

11. The optical spectrometer of claim 1 wherein the detectors are InGaAs or GaAs detectors.

12. The optical spectrometer of claim 1 wherein the optoelectronic device is implemented using VLSI technology.

13. The optical spectrometer of claim 1,7 or 8, wherein the spectrometer is used to either adjust or control one or more of the signals to be detected, or to control a WDM system that provides the WDM signals.
